# EUROPEAN PATENT APPLICATION

(11) **EP 0 889 310 A2**
(43) Date of publication of application: **07.01.1999**
(21) Application number: 98301457.2
(22) Date of filing: 27.02.1998
(51) Int. Cl.: G01M 3/06

(54) **An apparatus for testing a join between two metallic members**

(30) Priority: 30.06.1997 KR 9728875; 30.06.1997 KR 9728878
(71) Applicant: Samsung Electronics Co., Ltd., Suwon City, Kyungki-do (KR)
(72) Inventor: Kim, Jae-sin, Suwon-City, Kyungki-do (KR); Jang, Sam-yong, Suwon-City, Kyungki-do (KR)
(74) Representative: Geary, Stuart Lloyd

(57) **Abstract**

An apparatus for testing a join between two metallic members having a hollow cavity therebetween is disclosed. The apparatus includes air injection means (50) and a tub (40) of liquid. The air injection means (50) is configured for injecting air into a cavity between members so that when they are immersed in the liquid, the generation of air bubbles in the liquid indicates the presence of a hole in a join between members. The apparatus is primarily intended for testing the weld joining two components used in a device for counteracting the imbalance in a washing machine drum caused by the uneven distribution of laundry during rotation.

## Description

The present invention relates to an apparatus for testing a join between two metallic members.

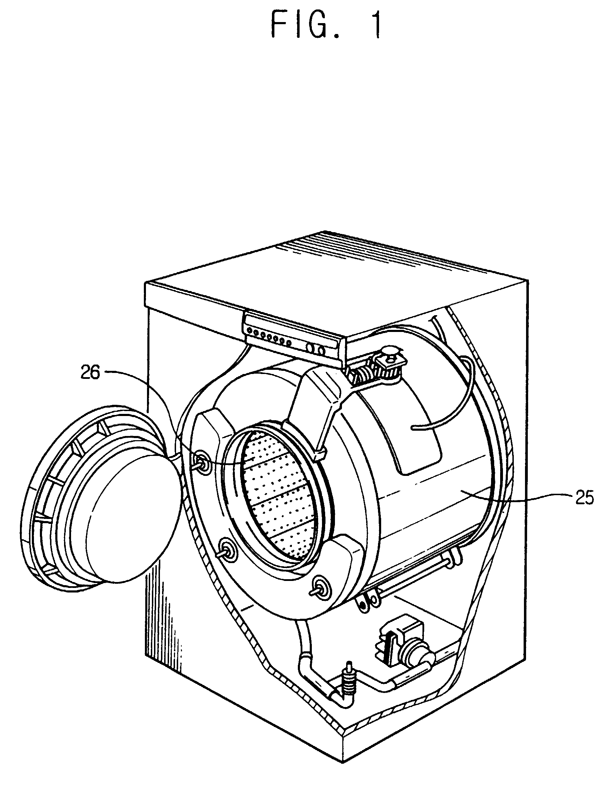

A conventional drum type washing machine is illustrated in Figure 1 and includes a drum 26 for receiving laundry to be washed, rotatably mounted within a tub 25.

The drum 26 rotates at a low speed during a washing cycle, and at a higher speed during a spin-drying cycle. When the drum 26 rotates at a high speed, vibration occurs due to the uneven distribution of laundry within the drum 26. The washing machine is therefore provided with a device to counterbalance the uneven load and reduce vibration of the drum 26 and the tub 25.

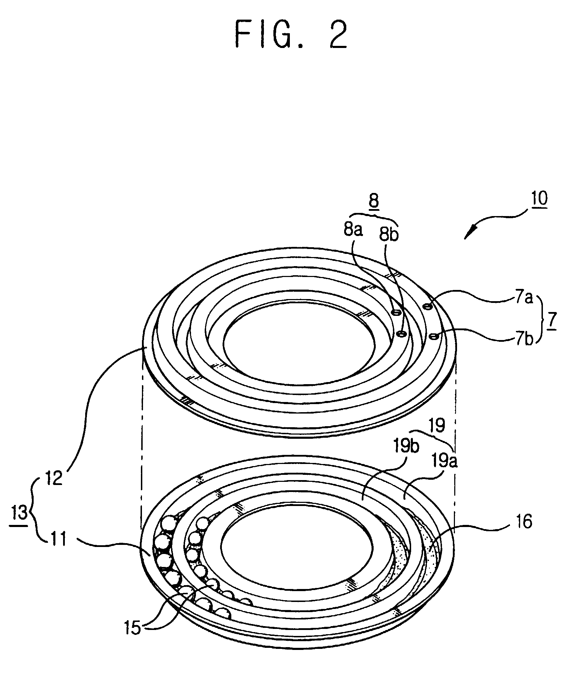

A typical counterbalancing device is a ball balancer of the type illustrated in Figure 2.

A ball balancer 10 generally includes a housing 13 comprising a lower portion 11 provided with annular races 19 around its circumference 26 and an annular cover 12 which fits onto and covers the lower portion 11. The races 19 accommodate a plurality of counterbalancing balls 15 which are free to move along the races 19 during rotation of the drum 26 to a position in which the uneven distribution of laundry within the drum 26 is counterbalanced by the weight of the balls 15. Therefore, vibration of the drum 26 and tub 25 is damped.

To ensure that the balls move smoothly in the races 19, and quickly counteract any imbalance, the races 19 are partially filled with oil or other lubricant. Holes 7a, and 8a, are provided in the annular cover 12 to enable oil to be injected into the races 19 following attachment of the cover 12 to the lower portion 11 and additional holes 7b and 8b provide passages for the discharge of air from the balancer housing 13 while the oil is injected through the holes 7a and 8a.

The lower portion 11 and the upper cover 12 of the balancer 13 are welded together. However, it is difficult to ascertain the quality of the weld which must be sufficient to ensure that the oil does not leak from the races after manufacture.

It is an object of the present invention to overcome or substantially alleviate the aforementioned disadvantage.

An apparatus for testing a join between two metallic members having a hollow cavity therebetween according to the present invention includes air injection means and a tub of liquid, wherein the air injection means is configured for injecting air into a cavity between members so that when they are immersed in the liquid, the generation of air bubbles in the liquid indicates the presence of a hole in a join between members.

In a preferred embodiment the apparatus includes a jig for holding members. Members are preferably clamped against the jig by pressing means which includes a plate movable towards the jig.

The air injection means, which is preferably an air injection nozzle, is conveniently mounted on the plate.

Preferably, closure means are provided for temporarily sealing at least one or more holes in members during the injection of air by the air injection nozzle.

In a preferred embodiment, means are included for moving the jig between a first raised position and second lowered position.

Embodiments of the present invention will now be described by way of example only with reference to the accompanying drawings, in which:
Figure 1 is a perspective view of a conventional drum type washing machine;
Figure 2 is an exploded perspective view of a balancer for damping vibration caused by the uneven distribution of laundry within the drum of a washing machine;

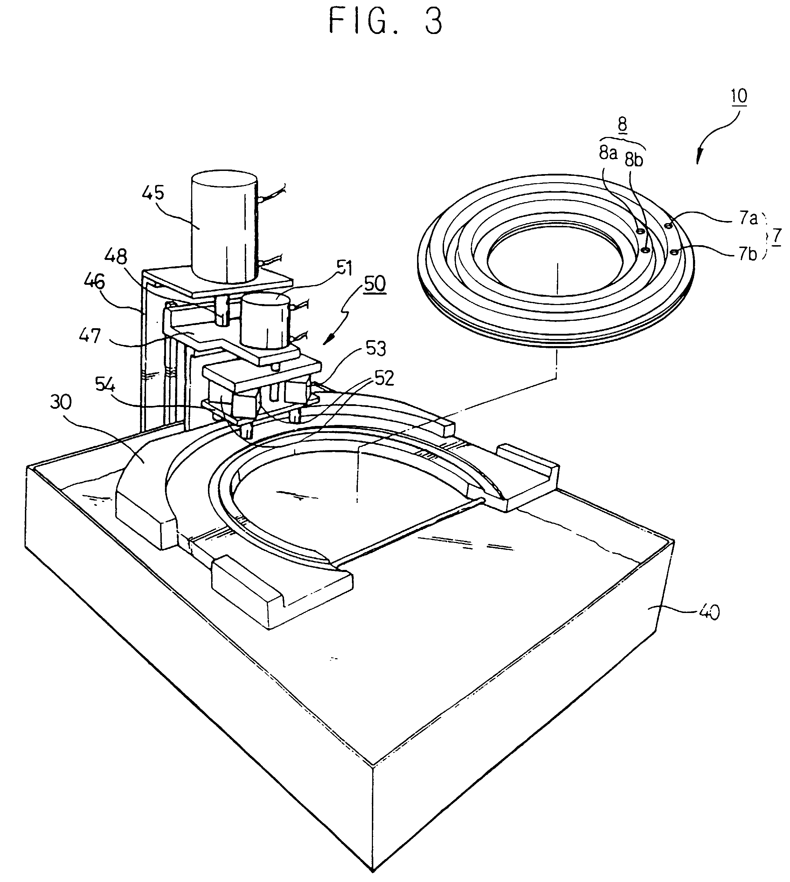

Figure 3 is a perspective view of a weld testing apparatus according to an embodiment of the present invention;

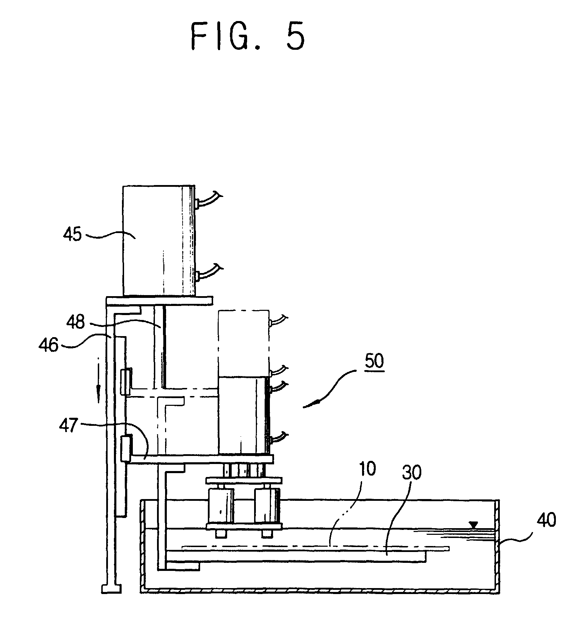

Figures 4 and 5 are side views of the weld testing apparatus; and
Figure 6 is a second embodiment of the present invention.

The apparatus for testing a weld comprises a jig 30 for receiving a welded balancer 10, a water tub 40, an elevation/de-elevation cylinder 45 for elevating/de-elevating the jig 30, and an air injection device 50 for injecting air into the balancer 10.

The elevation/de-elevation cylinder 45 is mounted on a frame 46, and a bracket 47 for supporting the jig 30 is mounted to one side of the frame 46. The elevation/de-elevation cylinder 45 includes a piston 48 for elevating/de-elevating the jig 30 via the bracket 47.

The air injection device 50 comprises a cylinder 51 mounted on the bracket 47 having a plate 54 mounted beneath it which is urged against the balancer 10 loaded on the jig 30 by the cylinder 51. Air injection nozzles 52 and a pair of hole closing members 53 are mounted on the plate 54 beneath the fixing cylinder 51. When the plate 54 is de-elevated by the cylinder 51 toward the balancer 10 loaded on the jig 30, the balancer 10 is urged against the jig 30 and firmly held in position. As the plate de-elevates, the air injection nozzles 52 communicate with air injection holes 7a and 8a formed in the walls of inner and outer races 19 of the balancer 10, and the closing members 53 communicate with holes 7b and 8b also formed in the wall of inner and outer races 19 of the balancer 10 and seal them.

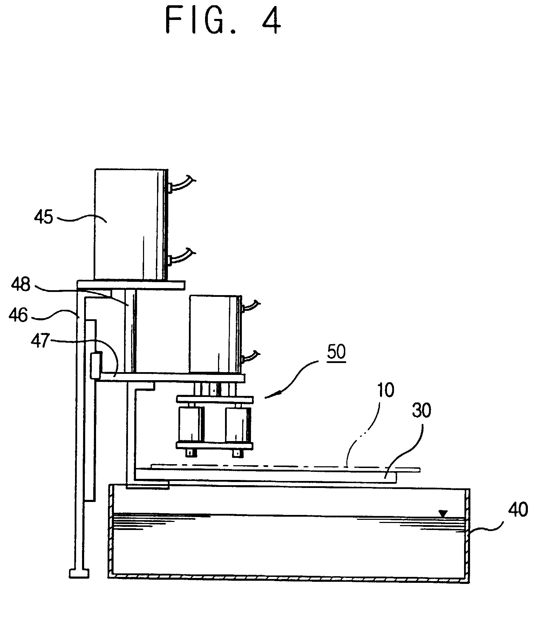

When the apparatus is in use, the jig 30 is elevated by the elevation/de-elevation cylinder 45 as shown in Figure 4, and a welded balancer 10 is loaded on the jig 30 before the plate 54 is de-elevated by the fixing cylinder 51 to firmly hold the balancer in position on the jig 30, and so that the air injection nozzles 52 and the closing members 53 communicate with corresponding holes 7 and 8 respectively. The elevation/de-elevation cylinder 45 is now operated to de-elevate the bracket 47 to immerse the jig 30 into the water tub 40.

When the balancer is completely immersed, the air injection nozzles 52 inject air into the balancer 10 through the holes 7a and 8a. Visual detection of a leak from the weld can now be made as bubbles of air will escape from inside the balancer through any holes.

When the test has been completed, the elevation/de-elevation cylinder 45 elevates the jig 30 to lift the balancer 10 from the water. The plate 54 is then elevated by the cylinder 51, to free the balancer from the jig and disconnect the air injection nozzles 52 and the closing members 53 from the holes 7 and 8. The operator can now remove the balancer 10 from the jig 30.

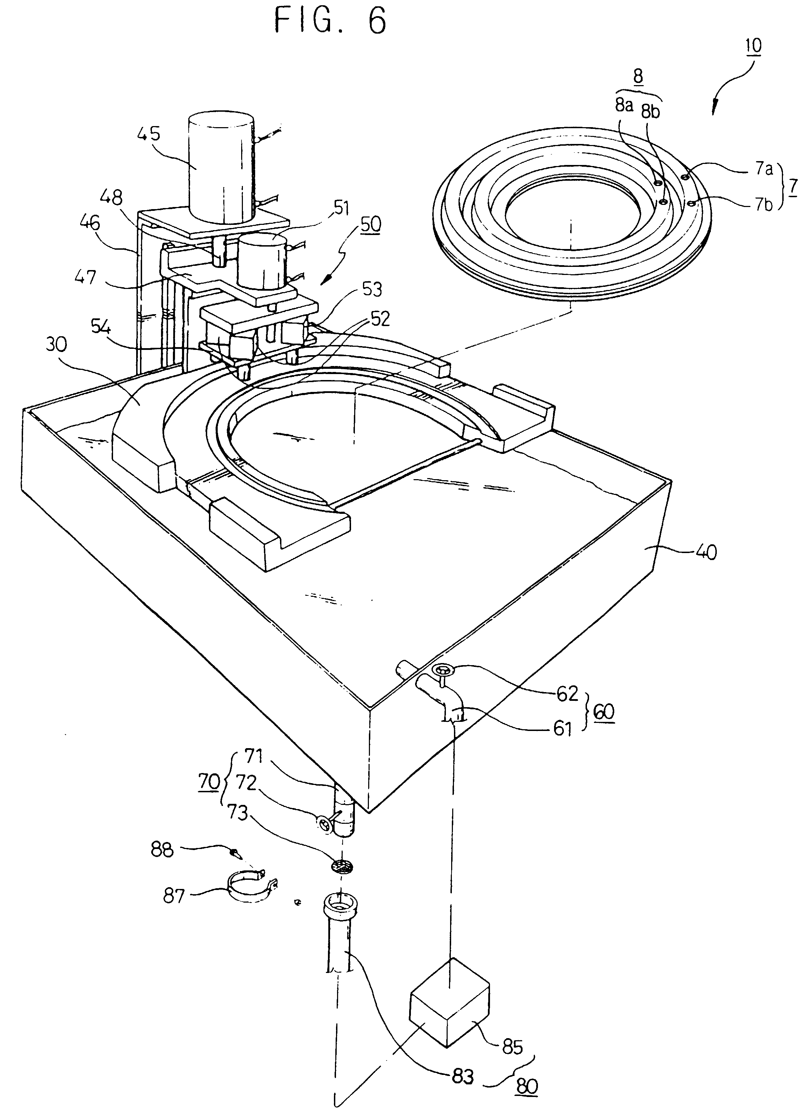

An alternative embodiment of the present invention is illustrated in Figure 6. In this embodiment, a device 60 for supplying water to the tub 40 and a drain device 70 are mounted on the tub 40. The water supply device 60 comprises a supply pipe 61 for supplying water to the tub 40, and a water supply valve 62 for opening/closing the supply pipe 61. The drain device 70 comprises a drain pipe 71 for draining water from the water tub 40, a drain valve 72 for opening/closing the drain pipe 71, and a filter 73 mounted on the end of the drain pipe 71 to filter impurities from the water as it is drained from the tub 40.

A circulation device 80 is disposed between the water supply pipe 61 and the drain pipe 71 for recycling the filtered water drained from the tub. The circulation device 80 comprises a circulation pipe 83 connecting the water supply pipe 61 with the drain pipe 71, and a pump 85 mounted in the vicinity of the circulation pipe 83. The drain pipe 71 and the circulation pipe 83 are connected together by a clamp 87 held by a screw 88. The water drained through the drain pipe 71 is filtered by the filter 73, and is then re-supplied to the water tub 40 by the pump 85 through the circulation pipe 83 and the water supply pipe 61.

According to the present embodiment, since the water supply device 60 and the drain device 70 are mounted on the water tub 40, a supply of water is readily available to enable a weld to be tested easily. Furthermore, since the water has been filtered by the filter 73 the water in the water tub 40 is clean and there is no need to renew it frequently. To renew the water in the tub 40, the circulation device 80 can be disconnected and the water drained out of the tub via the drain pipe 71.

Although the present invention has been described and illustrated in detail, it is clearly understood that the same is by way of illustration and example only and is not to be taken by way of limitation, wherein the scope of the present invention is limited only by the terms of the appended claims.

## Claims

1. An apparatus for testing a join between two metallic members having a hollow cavity therebetween, including air injection means (50) and a tub (40) of liquid, wherein the air injection means (50) is configured for injecting air into a cavity so that when members are immersed in the liquid, the generation of air bubbles in the liquid indicates the presence of a hole in a join between members.

2. An apparatus according to claim 1, comprising a jig (30).

3. An apparatus according to claim 2, comprising pressing means (51,54) configured for clamping members against the jig (30).

4. An apparatus according to claim 3, wherein the pressing means (51,54) includes a plate (54) movable towards the jig (30) to clamp members against the jig (30).

5. An apparatus according to claim 4, wherein the air injection means (50) are mounted on the plate (54).

6. An apparatus according to claim 6, wherein the air injection means (50) comprises an air injection nozzle (52).

7. An apparatus according to claim 6, comprising closure means (53) for temporarily sealing at least one or more holes in members during the injection of air by the air injection nozzle (52).

8. An apparatus according to claim 7, wherein the closure means (53) is mounted on the plate (54) adjacent to the air injection nozzle (52).

9. An apparatus according to any of claims 2 to 8, comprising means (45,46,47) for moving the jig (30) between a first raised position and a second lowered position.

10. An apparatus according to claim 9, wherein the means (45,46,47) for moving the jig (30) between the first and second positions includes a bracket (47) attached to the jig (30) movable in response to operation of a pneumatic or hydraulic cylinder (45).

11. An apparatus according to claim 9 or 10, wherein the tub (40) is positioned so that the jig (30) is in the tub (40) when in its second lowered position.

12. An apparatus according to any preceding claim, wherein the tub (40) includes means for filtering water in the tub (40).

13. An apparatus according to claim 12, including a pipe (61,67), a pump (85) for circulating water through the pipe (61,67) and a filter (73) located in the pipe (61,67) for filtering the circulated water.

14. An apparatus for testing a quality of weld of a balancer used in a drum type washing machine, said balancer having a balancer housing comprised of a lower housing for forming an annular race at a dehydration tub and an upper cover for covering said lower housing, and a plurality of balls accommodated in said race, said balancer for damping vibrations of said dehydration tub, said apparatus comprising:
a jig on which said balancer is loaded;
a water tub for containing water;
a means for elevating/de-elevating said jig on which said balancer is loaded so that said balancer is immersed in said water tub; and
a means for injecting air into said balancer immersed in said water tub so as to judge a normal status of weld of said balancer when bubbles are not generated in said water tub.

15. The apparatus for testing a quality of weld of a balancer as claimed in claim 14, wherein said air injecting means comprises a injection nozzle being inserted into a hole formed at said balancer housing, said injection nozzle for injecting the air through the hole.

16. The apparatus for testing a quality of weld of a balancer as claimed in claim 15, wherein the hole is an oil injection hole for injecting oil into said balancer housing therethrough.

17. The apparatus for testing a quality of weld of a balancer as claimed in claim 16, wherein a pair of holes are formed; and
said injection nozzle is inserted into one of the holes, and the other hole is closed by a closing member formed at a side of said air injecting means.

18. The apparatus for testing a quality of weld of a balancer as claimed in claim 14, further comprising:
a means for supplying water into said water tub; and
a means for draining the water in said water tub.

19. The apparatus for testing a quality of weld of a balancer as claimed in claim 18, wherein said water draining means comprises:
a drain pipe installed at the lower side of said water tub;
a valve for opening/closing said drain pipe; and
a filter being installed in said drain pipe.

20. The apparatus for testing a quality of weld of a balancer as claimed in claim 19, further comprising a means for circulating water filtered by said filter into said water tub.

21. The apparatus for testing a quality of weld of a balancer as claimed in claim 20, wherein said drain pipe is connected to said water supplying means; and
said circulating means comprises a pump disposed between said drain pipe and said water supplying means, said pump for pumping water drained through said drain pipe toward said water supplying means.
